# EUROPÄISCHE PATENTSCHRIFT

(11) **EP 3 830 095 B1**
(45) Veröffentlichungstag und Bekanntmachung des Hinweises auf die Patenterteilung: **07.09.2022**
(21) Anmeldenummer: 19742168.8
(22) Anmeldetag: 16.07.2019
(51) Int. Cl.: C07F 7/18, C08K 5/548, C08L 9/06

(54) **THIOETHERSILANE, VERFAHREN ZU DEREN HERSTELLUNG UND DEREN VERWENDUNG**
THIOETHER SILANES, METHOD FOR THE PRODUCTION THEREOF, AND USE THEREOF
THIOÉTHERSILANES, PROCÉDÉ POUR LEUR PRÉPARATION ET LEUR UTILISATION

(30) Priorität: 30.07.2018 DE 102018212672; 23.08.2018 DE 102018214229
(43) Veröffentlichungstag der Anmeldung: 09.06.2021
(73) Patentinhaber: Evonik Operations GmbH, 45128 Essen (DE)
(72) Erfinder: KÖPFER, Alexander, 79872 Bernau im Schwarzwald (DE); ROSENSTINGL, Sebastian, 79539 Lörrach (DE); MAYER, Stefanie, 79618 Rheinfelden (DE); RÖBEN, Caren, 45133 Essen (DE); KUFELT, Olga, 30171 Hannover (DE); JÜRGENS, Hannes, 53332 Bornheim (DE)
(74) Vertreter: Evonik Patent Association
(86) Internationale Anmeldenummer: PCT/EP2019/069055
(87) Internationale Veröffentlichungsnummer: WO 2020/025309

(56) Entgegenhaltungen:
- WO-A1-2007/039416

## Beschreibung

Die Erfindung betrifft Thioethersilane, Verfahren zur deren Herstellung sowie deren Verwendung.

Aus CAS 93575-00-9 ist eine Verbindung der Formel 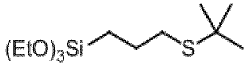 bekannt.

Ferner sind aus WO 2005059022 A1 und WO 2007039416 A1 Silane der Formel 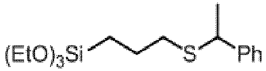 und deren Verwendung in Kautschukmischungen bekannt.

Aus Chem. Commun. 2011, 47, 11113-11115 ist ein Silan der Formel 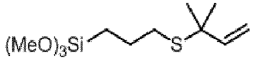 und aus DE 2340886 A1 ein Silan der Formel 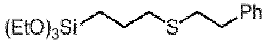 bekannt.

Ferner sind aus JP 2008310044 A Silane der Formel 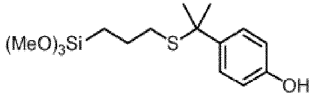 bekannt und deren Verwendung in Mikrolinsen.

Nachteile der bekannten Silane sind mangelnder Abriebwiderstand und geringe dynamische Steifigkeit in Kautschukmischungen.

Aufgabe der vorliegenden Erfindung ist es, Thioethersilane zur Verfügung zu stellen, welche gegenüber aus dem Stand der Technik bekannten Silanen in Kautschukmischungen Vorteile in Abriebwiderstand und dynamischer Steifigkeit aufweisen.

Gegenstand der Erfindung ist ein Thioethersilan der Formel I

(R¹)ₓ(R²)₃₋ₓSi-R³-S-C(CH₂R⁴)_{y}(R⁵)_{3-y} (I),

wobei R¹ gleich oder verschieden sind und C1-C10-Alkoxygruppen, vorzugsweise Ethoxy, Phenoxygruppen, C4-C10-Cycloalkoxygruppen oder Alkylpolyethergruppen -O-(R⁶-O)ᵣ-R⁷ sind, wobei R⁶ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind, r eine ganze Zahl von 1 bis 30 ist und R⁷ eine unsubstituierte oder substituierte, verzweigte oder unverzweigte einbindige Alkyl-, Alkenyl-, Aryl- oder Aralkylgruppe ist,
R² gleich oder verschieden sind und C6-C20-Arylgruppen, C1-C10-Alkylgruppen, C2-C20-Alkenylgruppen, C7-C20-Aralkylgruppen oder Halogen sind,
R³ eine verzweigte oder unverzweigte, gesättigte oder ungesättigte, aliphatische, aromatische oder gemischt aliphatische/aromatische zweibindige C1-C30-Kohlenwasserstoffgruppe ist,
R⁴ gleich oder verschieden sind und H, verzweigte oder unverzweigte, gesättigte oder ungesättigte, aliphatische C1-C30-Kohlenwasserstoffgruppen sind,
R⁵ gleich oder verschieden sind und unsubstituierte C6-C20-Arylgruppen, Alkyl substituierte C6-C20-Arylgruppen oder -C≡C-R⁸-Gruppen, vorzugsweise unsubstituierte C6-C20-Arylgruppen, besonders bevorzugt Phenylgruppen, sind, wobei R⁸ H, eine unsubstituierte oder substituierte, verzweigte oder unverzweigte einbindige Alkylgruppe oder eine C6-C20-Arylgruppe ist,
und x gleich 1, 2 oder 3, vorzugsweise 3, ist, y gleich 1 oder 2, vorzugsweise 2, ist.

Thioethersilane können Mischungen von Thioethersilanen der Formel I sein.

Das erfindungsgemäße Thioethersilan der Formel I kann Oligomere, vorzugsweise Dimere, die durch Hydrolyse und Kondensation der Alkoxysilanfunktionen der Thioethersilanen der Formel I entstehen, enthalten.

Das erfindungsgemäße Thioethersilan der Formel I kann Isomere, die durch eine andere Regioselektivität bei der Herstellung der Thioethersilanen der Formel I entstehen, enthalten.

Die Thioethersilane der Formel I können auf einem Träger, beispielsweise Wachs, Polymer oder Ruß, aufgebracht sein. Die Thioethersilane der Formel I können auf einer Kieselsäure aufgebracht sein, wobei die Anbindung physikalisch oder chemisch erfolgt sein kann.

R³ kann bevorzugt -CH₂-, -CH₂CH₂-, -CH₂CH₂CH₂-, -CH₂CH₂CH₂CH₂-, -CH(CH₃)-, -CH₂CH(CH₃)-,-CH(CH₃)CH₂-, -C(CH₃)₂-, -CH(C₂H₅)-, -CH₂CH₂CH(CH₃)-, -CH(CH₃)CH₂CH₂-, -CH₂CH(CH₃)CH₂-, -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, -CH₂CH₂CH₂CH₂CH₂CH₂CH₂CH₂CH₂-, -CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂CH₂CH₂- oder 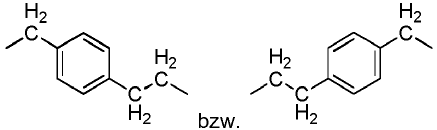 bedeuten.

R¹ kann bevorzugt Methoxy oder Ethoxy, besonders bevorzugt Ethoxy, sein.

R⁴ kann bevorzugt H, Methyl oder Ethyl, besonders bevorzugt H, sein.

R⁵ kann bevorzugt Phenyl, Naphtyl oder Tolyl, besonders bevorzugt Phenyl, sein.

Thioethersilane der Formel I können bevorzugt Verbindungen sein mit R¹ Ethoxy, R⁴ H und R⁵ Phenyl oder Tolyl.

Thioethersilan der Formel I können besonders bevorzugt Verbindungen sein mit R¹ Ethoxy, x=3, R³ CH₂CH₂CH₂, R⁴ H und R⁵ Phenyl.

Thioethersilane der Formel I können bevorzugt sein:
(EtO)₃Si-CH₂-S-C(CH₃)₂(phenyl),
(EtO)₃Si-CH₂CH₂-S-C(CH₃)₂(phenyl),
(EtO)₃Si-CH₂CH₂CH₂-S-C(CH₃)₂(phenyl),
(EtO)₃Si-CH₂-S-C(CH₃)(phenyl)₂,
(EtO)₃Si-CH₂CH₂-S-C(CH₃)(phenyl)₂,
(EtO)₃Si-CH₂CH₂CH₂-S-C(CH₃)(phenyl)₂,
(EtO)₃Si-CH₂-S-C(CH₃)₂(naphtyl),
(EtO)₃Si-CH₂CH₂-S-C(CH₃)₂(naphtyl),
(EtO)₃Si-CH₂CH₂CH₂-S-C(CH₃)₂(naphtyl),
(EtO)₃Si-CH₂-S-C(CH₃)(naphtyl)₂,
(EtO)₃Si-CH₂CH₂-S-C(CH₃)(naphtyl)₂,
(EtO)₃Si-CH₂CH₂CH₂-S-C(CH₃)(naphtyl)₂,
(EtO)₃Si-CH₂-S-C(CH₃)₂(tolyl),
(EtO)₃Si-CH₂CH₂-S-C(CH₃)₂(tolyl),
(EtO)₃Si-CH₂CH₂CH₂-S-C(CH₃)₂(tolyl),
(EtO)₃Si-CH₂-S-C(CH₃)(tolyl)₂,
(EtO)₃Si-CH₂CH₂-S-C(CH₃)(tolyl)₂,
(EtO)₃Si-CH₂CH₂CH₂-S-C(CH₃)(tolyl)₂,

(H₂₇C₁₃-(O-C₂H₄)₅-O)(EtO)₂Si-CH₂-S-C(CH₃)₂(phenyl),
(H₂₇C₁₃-(O-C₂H₄)₅-O)(EtO)₂Si-CH₂CH₂-S-C(CH₃)₂(phenyl),
(H₂₇C₁₃-(O-C₂H₄)₅-O)(EtO)₂Si-CH₂CH₂CH₂-S-C(CH₃)₂(phenyl),
(H₂₇C₁₃-(O-C₂H₄)₅-O)(EtO)₂Si-CH₂-S-C(CH₃)(phenyl)₂,
(H₂₇C₁₃-(O-C₂H₄)₅-O)(EtO)₂Si-CH₂CH₂-S-C(CH₃)(phenyl)₂,
(H₂₇C₁₃-(O-C₂H₄)₅-O)(EtO)₂Si-CH₂CH₂CH₂-S-C(CH₃)(phenyl)₂,
(H₂₇C₁₃-(O-C₂H₄)₅-O)(EtO)₂Si-CH₂-S-C(CH₃)₂(naphtyl),
(H₂₇C₁₃-(O-C₂H₄)₅-O)(EtO)₂Si-CH₂CH₂-S-C(CH₃)₂(naphtyl),
(H₂₇C₁₃-(O-C₂H₄)₅-O)(EtO)₂Si-CH₂CH₂CH₂-S-C(CH₃)₂(naphtyl),
(H₂₇C₁₃-(O-C₂H₄)₅-O)(EtO)₂Si-CH₂-S-C(CH₃)(naphtyl)₂,
(H₂₇C₁₃-(O-C₂H₄)₅-O)(EtO)₂Si-CH₂CH₂-S-C(CH₃)(naphtyl)₂,
(H₂₇C₁₃-(O-C₂H₄)₅-O)(EtO)₂Si-CH₂CH₂CH₂-S-C(CH₃)(naphtyl)₂,
(H₂₇C₁₃-(O-C₂H₄)₅-O)(EtO)₂Si-CH₂-S-C(CH₃)₂(tolyl),
(H₂₇C₁₃-(O-C₂H₄)₅-O)(EtO)₂Si-CH₂CH₂-S-C(CH₃)₂(tolyl),
(H₂₇C₁₃-(O-C₂H₄)₅-O)(EtO)₂Si-CH₂CH₂CH₂-S-C(CH₃)₂(tolyl),
(H₂₇C₁₃-(O-C₂H₄)₅-O)(EtO)₂Si-CH₂-S-C(CH₃)(tolyl)₂,
(H₂₇C₁₃-(O-C₂H₄)₅-O)(EtO)₂Si-CH₂CH₂-S-C(CH₃)(tolyl)₂,
(H₂₇C₁₃-(O-C₂H₄)₅-O)(EtO)₂Si-CH₂CH₂CH₂-S-C(CH₃)(tolyl)₂,

(MeO)₃Si-CH₂-S-C(CH₃)₂(phenyl),
(MeO)₃Si-CH₂CH₂-S-C(CH₃)₂(phenyl),
(MeO)₃Si-CH₂CH₂CH₂-S-C(CH₃)₂(phenyl),
(MeO)₃Si-CH₂-S-C(CH₃)(phenyl)₂,
(MeO)₃Si-CH₂CH₂-S-C(CH₃)(phenyl)₂,
(MeO)₃Si-CH₂CH₂CH₂-S-C(CH₃)(phenyl)₂,
(MeO)₃Si-CH₂-S-C(CH₃)₂(naphtyl),
(MeO)₃Si-CH₂CH₂-S-C(CH₃)₂(naphtyl),
(MeO)₃Si-CH₂CH₂CH₂-S-C(CH₃)₂(naphtyl),
(MeO)₃Si-CH₂-S-C(CH₃)(naphtyl)₂,
(MeO)₃Si-CH₂CH₂-S-C(CH₃)(naphtyl)₂,
(MeO)₃Si-CH₂CH₂CH₂-S-C(CH₃)(naphtyl)₂,
(MeO)₃Si-CH₂-S-C(CH₃)₂(tolyl),
(MeO)₃Si-CH₂CH₂-S-C(CH₃)₂(tolyl),
(MeO)₃Si-CH₂CH₂CH₂-S-C(CH₃)₂(tolyl),
(MeO)₃Si-CH₂-S-C(CH₃)(tolyl)₂,
(MeO)₃Si-CH₂CH₂-S-C(CH₃)(tolyl)₂,
(MeO)₃Si-CH₂CH₂CH₂-S-C(CH₃)(tolyl)₂,

(EtO)₃Si-CH₂-S-C(CH₃)₂C≡CH,
(EtO)₃Si-CH₂CH₂-S-C(CH₃)₂C≡CH,
(EtO)₃Si-CH₂CH₂CH₂-S-C(CH₃)₂C≡CH,
(EtO)₃Si-CH₂-S-C(CH₃)₂C≡C-CH₂CH₃,
(EtO)₃Si-CH₂CH₂-S-C(CH₃)₂C≡C-CH₂CH₃,
(EtO)₃Si-CH₂CH₂CH₂-S-C(CH₃)₂C≡C-CH₂CH₃,
(EtO)₃Si-CH₂-S-C(CH₃)₂C≡C-CH₃,
(EtO)₃Si-CH₂CH₂-S-C(CH₃)₂C≡C-CH₃,
(EtO)₃Si-CH₂CH₂CH₂-S-C(CH₃)₂C≡C-CH₃,
(EtO)₃Si-CH₂-S-C(CH₃)₂C≡C-Ph,
(EtO)₃Si-CH₂CH₂-S-C(CH₃)₂C≡C-Ph,
(EtO)₃Si-CH₂CH₂CH₂-S-C(CH₃)₂C≡C-Ph,
(MeO)₃Si-CH₂-S-C(CH₃)₂C≡CH,
(MeO)₃Si-CH₂CH₂-S-C(CH₃)₂C≡CH,
(MeO)₃Si-CH₂CH₂CH₂-S-C(CH₃)₂C≡CH,
(MeO)₃Si-CH₂-S-C(CH₃)₂C≡C-CH₂CH₃,
(MeO)₃Si-CH₂CH₂-S-C(CH₃)₂C≡C-CH₂CH₃,
(MeO)₃Si-CH₂CH₂CH₂-S-C(CH₃)₂C≡C-CH₂CH₃,
(MeO)₃Si-CH₂-S-C(CH₃)₂C≡C-CH₃,
(MeO)₃Si-CH₂CH₂-S-C(CH₃)₂C≡C-CH₃,
(MeO)₃Si-CH₂CH₂CH₂-S-C(CH₃)₂C≡C-CH₃,
(MeO)₃Si-CH₂-S-C(CH₃)₂C≡C-Ph,
(MeO)₃Si-CH₂CH₂-S-C(CH₃)₂C≡C-Ph,
(MeO)₃Si-CH₂CH₂CH₂-S-C(CH₃)₂ C=C-Ph,

Insbesondere bevorzugt sind die Verbindungen der Formel (EtO)₃Si-CH₂CH₂CH₂-S-C(CH₃)₂(phenyl) und (EtO)₃Si-CH₂CH₂CH₂-S-C(CH₃)(phenyl)₂.

Ein weiterer Gegenstand der Erfindung ist ein Verfahren zur Herstellung der erfindungsgemäßen Thioethersilane der Formel I

(R¹)ₓ(R²)₃₋ₓSi-R³-S-C(CH₂R⁴)_{y}(R⁵)_{3-y} (I),

wobei R¹, R², R³, R⁴, R⁵, x und y die oben genannte Bedeutung haben, welches dadurch gekennzeichnet ist, dass man ein Silan der Formel II

(R¹)ₓ(R²)₃₋ₓSi-R³-SH (II)

mit einem Alken der Formel III

R⁴-HC=C(CH₂R⁴)_{y-1}(R⁵)_{3-y} (III),

umsetzt.

Silane der Formel II können bevorzugt sein:
(C₂H₅O)₃Si-CH₂-SH,
(C₂H₅O)₃Si-CH₂CH₂-SH,
(C₂H₅O)₃Si-CH₂CH₂CH₂-SH,
(H₂₇C₁₃-(O-C₂H₄)₅-O) (C₂H₅O)₂Si-CH₂-SH,
(H₂₇C₁₃-(O-C₂H₄)₅-O) (C₂H₅O)₂Si-CH₂CH₂-SH,
(H₂₇C₁₃-(O-C₂H₄)₅-O) (C₂H₅O)₂Si-CH₂CH₂CH₂-SH,
(CH₃O)₃Si-CH₂-SH,
(CH₃O)₃Si-CH₂CH₂-SH oder
(CH₃O)₃Si-CH₂CH₂CH₂-SH.

Verbindungen der Formel III können bevorzugt sein:
H₂C=C(Me)(Phenyl),
H₂C=C(Me)(Naphtyl),
H₂C=C(Me)(Tolyl),
H₂C=C(Phenyl)(Phenyl),
H₂C=C(Naphtyl)(Naphtyl),
H₂C=C(Tolyl)(Tolyl),
H₂C=C(Me)C≡CH,
H₂C=C(Me)C≡CCH₃,
H₂C=C(Me)C≡CCH₂CH₃ oder
H₂C=C(Me)C≡C(Phenyl).

Die Reaktion kann unter Luftausschluss durchgeführt werden.

Die Reaktion kann unter Schutzgasatmosphäre durchgeführt werden, zum Beispiel unter Argon oder Stickstoff, bevorzugt unter Stickstoff.

Das erfindungsgemäße Verfahren kann bei Normaldruck, erhöhtem Druck oder reduziertem Druck durchgeführt werden. Bevorzugt kann das erfindungsgemäße Verfahren bei Normaldruck durchgeführt werden.

Erhöhter Druck kann eine Druck von 1,1 bar bis 100 bar, bevorzugt von 1,1 bar bis 50 bar, besonders bevorzugt von 1,1 bar bis 20 bar und ganz besonders bevorzugt von 1,1 bis 10 bar, sein.

Reduzierter Druck kann ein Druck von 1 mbar bis 1000 mbar, bevorzugt 1 mbar bis 500 mbar, besonders bevorzugt 1 mbar bis 250 mbar, ganz besonders bevorzugt 1 mbar bis 100 mbar, sein.

Das erfindungsgemäße Verfahren kann zwischen 20°C und 180°C, bevorzugt zwischen 60°C und 140°C, besonders bevorzugt zwischen 70°C und 110°C, durchgeführt werden.

Die Umsetzung kann in einem Lösungsmittel, beispielsweise Methanol, Ethanol, Propanol, Butanol, Cyclohexanol, N,N-Dimethylformamid, Dimethylsulfoxid, Pentan, Hexan, Cyclohexan, Heptan, Octan, Dekan, Toluol, Xylol, Aceton, Acetonitril, Diethylether, Methyltertbutylether, Methylethylketon, Tetrahydrofuran, Dioxan, Pyridin oder Essigsäureethylester, durchgeführt werden.

Die Umsetzung kann bevorzugt ohne Lösungsmittel durchgeführt werden.

Die Reaktion kann katalysiert durchgeführt werden. Als Katalysator kann BF₃, SO₃, SnCl₄, TiCl₄, SiCl₄, ZnCl₂, FeCl₃ oder AlCl₃ verwendet werden.

Vorzugsweise kann FeCl₃, AlCl₃ oder ZnCl₂ verwendet werden.

Besonders bevorzugt kann AlCl₃ verwendet werden.

Die Reaktionspartner können alle gemeinsam vorgelegt werden oder zueinander zudosiert werden. Bevorzugt kann die Verbindung der Formel III zu dem Silan der Formel II gegeben werden.

Bei dem erfindungsgemäßen Verfahren können Nebenprodukte wie beispielsweise Dimere der Thioethersilane der Formel I, Dimere der Alkene der Formel III und Reaktionsprodukt des Silans der Formel II mit dem R¹-Substituenten unter Bildung eines Thioethers entstehen.

Die Thioethersilane der Formel I können als Haftvermittler zwischen anorganischen Materialien, zum Beispiel Glaskugeln, Glasplittern, Glasoberflächen, Glasfasern, oder oxidischen Füllstoffen, bevorzugt Kieselsäuren wie gefällten Kieselsäuren und pyrogenen Kieselsäuren, und organischen Polymeren, zum Beispiel Duroplasten, Thermoplasten oder Elastomeren, beziehungsweise als Vernetzungsmittel und Oberflächenmodifizierungsmittel für oxidische Oberflächen verwendet werden.

Die Thioethersilane der Formel I können als Kopplungsreagenzien in gefüllten Kautschukmischungen, beispielsweise Reifenlaufflächen, technischen Gummiartikeln oder Schuhsolen, verwendet werden.

Ein weiterer Gegenstand der Erfindung sind Kautschukmischungen, welche dadurch gekennzeichnet sind, dass diese mindestens einen Kautschuk und mindestens ein erfindungsgemäßes Thioethersilan der Formel I enthalten.

Die erfindungsgemäße Kautschukmischung kann ein Mercaptosilan enthalten. Das Mercaptosilan kann Mercaptopropyltriethoxysilan, beispielsweise VP Si 263 der Firma Evonik Resource Efficiency GmbH, geblocktes Mercaptosilan, vorzugsweise 3-Octanoylthio-1-propyltriethoxysilan, beispielsweise NXT^{™} der Firma Momentive Performance Materials Inc., oder umgeestertes Mercaptopropyltriethoxysilan, vorzugsweise 4-((3,6,9,12,15-Pentaoxaoctacosyl)oxy)-4-ethoxy-5,8,11,14,17,20-hexaoxa-4-silatritriacontan-1-thiol, beispielsweise Si 363^{™} der Firma Evonik Resource Efficiency GmbH, sein.

Die Kautschukmischung kann mindestens einen Füllstoff enthalten.

Als Füllstoffe können für die erfindungsgemäßen Kautschukmischungen die folgenden Füllstoffe eingesetzt werden:
- Ruße: Die hierbei zu verwendenden Ruße können nach dem Flammruß-, Furnace-, Gasruß oder Thermalruß-Verfahren hergestellt werden. Die Ruße können eine BET-Oberfläche von 20 bis 200 m²/g haben. Die Ruße können gegebenenfalls auch dotiert sein, wie zum Beispiel mit Si.
- Amorphe Kieselsäuren, vorzugsweise gefällte Kieselsäuren oder pyrogene Kieselsäuren. Die amorphen Kieselsäuren können eine spezifische Oberfläche von 5 bis 1000 m²/g, vorzugsweise 20 bis 400 m²/g (BET-Oberfläche) und eine Primärteilchengröße von 10 bis 400 nm haben. Die Kieselsäuren können gegebenenfalls auch als Mischoxide mit anderen Metalloxiden, wie AI-, Mg-, Ca-, Ba-, Zn- und Titanoxiden, vorliegen.
- Synthetische Silikate, wie Aluminiumsilikat oder Erdalkalisilikate, beispielsweise Magnesiumsilikat oder Calciumsilikat. Die synthetischen Silikate mit BET-Oberflächen von 20 bis 400 m²/g und Primärteilchendurchmessern von 10 bis 400 nm.
- Synthetische oder natürliche Aluminiumoxide und -hydroxide.
- Natürliche Silikate, wie Kaolin und andere natürlich vorkommende Kieselsäuren.
- Glasfaser und Glasfaserprodukte (Matten, Stränge) oder Mikroglaskugeln.

Bevorzugt können amorphe Kieselsäuren, besonders bevorzugt gefällte Kieselsäuren oder Silikate, insbesondere bevorzugt gefällte Kieselsäuren mit einer BET-Oberflächen von 20 bis 400 m²/g in Mengen von 5 bis 180 Gew.-Teilen, jeweils bezogen auf 100 Teile Kautschuk, eingesetzt werden.

Die genannten Füllstoffe können alleine oder im Gemisch eingesetzt werden. In einer besonders bevorzugten Ausführung des Verfahrens können 10 bis 180 Gew.-Teile Füllstoffe, vorzugsweise gefällte Kieselsäure, gegebenenfalls zusammen mit 0 bis 100 Gew.-Teilen Ruß, sowie 0,1 bis 20 Gew.-Teilen Thioethersilan der allgemeinen Formel I, jeweils bezogen auf 100 Gew.-Teile Kautschuk, zur Herstellung der Mischungen eingesetzt werden.

Für die Herstellung der erfindungsgemäßen Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen unter anderem
- Polybutadien (BR),
- Polyisopren (IR),
- Styrol/Butadien-Copolymerisate, beispielsweise Emulsions-SBR (E-SBR) oder Lösungs-SBR (L-SBR), vorzugsweise mit einem Styrolgehalt von 1 bis 60 Gew.-%, besonders bevorzugt 2 bis 50 Gew.-%, bezogen auf das Gesamtpolymer,
- Chloropren (CR),
- Isobutylen/Isopren-Copolymerisate (IIR),
- Butadien/Acrylnitril-Copolymere, vorzugsweise mit einem Acrylnitrilgehalt von 5 bis 60 Gew.-%, vorzugsweise 10 bis 50 Gew.-%, bezogen auf das Gesamtpolymer (NBR),
- teilhydrierter oder vollständig hydrierter NBR-Kautschuk (HNBR),
- Ethylen/Propylen/Dien-Copolymerisate (EPDM) oder
- oben genannte Kautschuke, die zusätzlich funktionelle Gruppen besitzen, wie z.B. Carboxy-, Silanol- oder Epoxygruppen, beispielsweise Epoxidierter NR, Carboxy-funktionalisierter NBR oder Silanol- (-SiOH) bzw. Siloxy-funktionalisierter (-Si-OR), Amino- Epoxy-, Mercapto-, Hydroxy-funktionalisierte SBR,
sowie Mischungen dieser Kautschuke. Für die Herstellung von PKW-Reifenlaufflächen sind insbesondere anionisch polymerisierte L-SBR-Kautschuke (Lösungs-SBR) mit einer Glastemperatur oberhalb von -50 °C sowie deren Mischungen mit Dienkautschuken von Interesse.

Besonders bevorzugt kann als Kautschuk NR oder funktionalisiertes oder nicht funktionalisiertes L-SBR/BR eingesetzt werden.

Die erfindungsgemäßen Kautschukmischungen können weitere Kautschukhilfsstoffe enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Harze, Tackifier, Treibmittel, Farbstoffe, Pigmente, Wachse, Streckmittel, organische Säuren, Verzögerer, Metalloxide sowie Aktivatoren, wie Diphenylguanidin, Triethanolamin, Polyethylenglykol, Alkoxyterminiertes Polyethylenglykol Alkyl-O-(CH₂-CH₂-O)_{yl}-H mit y^{l} = 2-25, bevorzugt y^{l}=2-15, besonders bevorzugt y^{l}=3-10, ganz besonders bevorzugt y^{l}=3-6, oder Hexantriol, die der Kautschukindustrie bekannt sind.

Die Kautschukhilfsmittel können in bekannten Mengen, die sich unter anderem nach dem Verwendungszweck richten, eingesetzt werden. Übliche Mengen können zum Beispiel Mengen von 0,1 bis 50 Gew.-%, bezogen auf Kautschuk, sein. Als Vernetzer können Peroxide, Schwefel oder schwefelspendende Substanzen eingesetzt werden. Die erfindungsgemäßen Kautschukmischungen können darüber hinaus Vulkanisationsbeschleuniger enthalten. Beispiele für geeignete Vulkanisationsbeschleuniger können Mercaptobenzthiazole, Sulfenamide, Thiurame, Dithiocarbamate, Thioharnstoffe und Thiocarbonate sein. Die Vulkanisationsbeschleuniger und Schwefel können in Mengen von 0,1 bis 10 Gew.-%, bevorzugt 0,1 bis 5 Gew.-%, bezogen auf 100 Gew.-Teile Kautschuk, eingesetzt werden.

Die Vulkanisation der erfindungsgemäßen Kautschukmischungen kann bei Temperaturen von 100 bis 200 °C, bevorzugt 120 bis 180 °C, gegebenenfalls unter Druck von 10 bis 200 bar erfolgen. Die Abmischung der Kautschuke mit dem Füllstoff, gegebenenfalls Kautschukhilfsmitteln und der Thioethersilanen kann in bekannten Mischaggregaten, wie Walzen, Innenmischern und Mischextrudern, durchgeführt werden.

Die erfindungsgemäßen Kautschukmischungen können zur Herstellung von Formkörpern, zum Beispiel für die Herstellung von Reifen, insbesondere Luftreifen oder Reifenlaufflächen, Kabelmänteln, Schläuchen, Treibriemen, Förderbändern, Walzenbelägen, Schuhsohlen, Dichtungsringen und Dämpfungselementen, verwendet werden.

Vorteile der erfindungsgemäßen Thioethersilane der Formel I sind verbesserter Abriebwiderstand, sowie erhöhte dynamische Steifigkeit in Kautschukmischungen.

### Beispiele

Reinheitsbestimmungen erfolgten mittels Gaschromatographie oder NMR.

Gaschromatographie: Temperaturprogramm: 70 °C - 5 min - 20 °C/min - 260 °C - 15 min; Column: Agilent HP5, Länge: 30 m - Durchmesser: 230 µm - Film Dicke: 0.25 µm; Detector: WLD. Die NMR Spektren wurden auf einem 400 MHz NMR-Gerät der Firma BRUKER aufgenommen. Die Spektren wurden jeweils auf das Signal von Tetramethylsilan mit 0.00 ppm für 1H-, 13C- und 29Si-Spektren kalibriert. Bei Reinheitsbestimmungen wurde Tetramethylbenzol oder Dimethylsulfon als interner Standard verwendet.

### Vergleichsbeispiel 1: (3-(tert-Butylthio)propyl)triethoxysilan

tert-Butylthiol (119 g; 1,10 eq) wurde vorgelegt und tropfenweise mit Natriumethanolat (w = 21%; 408 g; 1,05 eq) versetzt. Das Gemisch wurde bei 60 °C für ca. 1 h gerührt. Anschließend wurde CPTEO (289 g; 1,00 eq) bei 60 °C zu getropft. Dann wurde das Reaktionsgemisch 5 h refluxiert und anschließend überschüssige Leichtsieder sowie Lösungsmittel bei Normaldruck destillativ entfernt. Die destillierte Suspension wurde filtriert und das Rohprodukt (Filtrat) mittels Vakuumdestillation über Kopf destilliert (Siedepunkt 90-95 °C bei 0,6 mbar). (3-(tert-Butylthio)propyl)triethoxysilan (Ausbeute 72%, Reinheit: 99,6 A% ermittelt via GC) konnte als klares farbloses Öl erhalten werden.

### Vergleichsbeispiel 2: Triethoxy(3-((1-phenylethyl)thio)propyl)silan

Unter Schutzgas Atmosphäre wurde aus Ethanol (260 g; 11,9 eq) und elementarem Natrium (11.5 g; 1,00 eq) ethanolische Natriumethanolat Lösung hergestellt. Im Anschluss wurde 3-Mercaptopropyltriethoxysilan zu getropft. Nach erfolgter Zugabe wurde für 30 min nachgerührt. Die Reaktionslösung wurde mittels Ölbad auf 60 °C erhitzt und 1-Bromethylbenzol innerhalb von 20 min zu getropft. Die Reaktionsmischung wurde für 11 h bei 60 °C nachgerührt. Nach beendeter Reaktion wurde die Suspension abfiltriert und per Destillation von Leichtsiedern befreit. Triethoxy(3-((1-phenylethyl)thio)propyl)silan (Ausbeute 93%, Reinheit: > 95% (NMR) wurde als klares gelbes Öl erhalten.

### Beispiel 1: (3-((1,1-Diphenylethyl)thio)propyl)triethoxysilan

3-Mercaptopropyltriethoxysilan (327 g; 1,0 eq), 1,1-Diphenylethylen (247 g; 1,0 eq) und Aluminiumchlorid (10,1 g; 2,0 Gew.%) wurden bei Raumtemperatur vorgelegt, gerührt und mittels Ölbad auf 80 °C erwärmt. Bei dieser Temperatur wurde für 33 Stunden nachgerührt und anschließend auf Raumtemperatur abgekühlt. Zum Schluss wurden die Leichtsieder mittels Destillation abgetrennt.

(3-((1,1-Diphenylethyl)thio)propyl)triethoxysilan (Ausbeute: 63%, Reinheit: 61,8 Gew.-% (aus Kombination von 13C- und 29Si-NMR mit Dimethylsulfon als internem Standard)) wurde als leicht gelbliche Flüssigkeit erhalten.

Nebenkomponenten waren 1,3-bis(3-((1,1-diphenylethyl)thio)propyl)-1,1,3,3-tetraethoxydisiloxan (28,2 Gew.-%), Triethoxy(3-(ethylthio)propyl)silan (4,6 Gew.-%), 3-(Triethoxysilyl)propanthiol 0,3 Gew.-%), Diphenylethylen (5,1 Gew.-%).

### Beispiel 2: Triethoxy(3-((2-phenylpropan-2-yl)thio)propyl)silan

3-Mercaptopropyltriethoxysilan (403 g; 1,0 eq), α-Methylstyrol (200 g; 1,0 eq) und Aluminiumchlorid (8,12 g; 2,0 mol%) wurden bei Raumtemperatur vorgelegt, gerührt und mittels Ölbad auf 100 °C erwärmt. Bei dieser Temperatur wurde für 16 Stunden gerührt und anschließend auf Raumtemperatur abkühlen gelassen. Dann wurde filtriert und die Leichtsieder mittels Destillation abgetrennt.

Triethoxy(3-((2-phenylpropan-2-yl)thio)propyl)silan (Ausbeute: 99%, Reinheit: 80,1 Gew.-% (aus Kombination von 13C- und 29Si-NMR mit Dimethylsulfon als internem Standard)) wurde als farblose Flüssigkeit erhalten.

Nebenkomponenten waren 1,1,3,3-Tetraethoxy-1,3-bis(3-((2-phenylpropan-2-yl)thio)propyl)disiloxan (11,6 Gew.-%), Triethoxy(3-(ethylthio)propyl)silan (5,1 Gew.-%), 3-(Triethoxysilyl)propanthiol (0,9 Gew.-%), α-Methylstyrol (0,7 Gew.-%), α-Methylstyroldimer (1,6 Gew.-%).

### Beispiel 3: 7,7-Diethoxy-2-methyl-2-phenyl-8,11,14,17,20,23-hexaoxa-3-thia-7-silahexatriacontan

Triethoxy(3-((2-phenylpropan-2-yl)thio)propyl)silan (aus Beispiel 2, 106,2 g; 1,0 eq), 3,6,9,12,15-pentaoxaoctacosan-1-ol (125,3 g; 1,0 eq) und Titantetrabutanolat (53 µL; 0,05 Gew.-% / Triethoxy(3-((2-phenylpropan-2-yl)thio)propyl)silan) zugegeben. Es wurde auf 140 °C erwärmt, das entstehende Ethanol wurde abdestilliert und nach 1 h ein Druck von 400-600 mbar eingestellt. Nach 1 h wurde der Druck auf 16-200 mbar vermindert und es wurde 4 h gerührt. Anschließend wurde das Reaktionsgemisch auf Raumtemperatur erkalten gelassen und das Reaktionsprodukt filtriert. 7,7-Diethoxy-2-methyl-2-phenyl-8,11,14,17,20,23-hexaoxa-3-thia-7-silahexatriacontan (Ausbeute: 99%, Umesterungsgrad 33% Polyetheralkohol / Si) wurde als viskose Flüssigkeit erhalten.

Die Reinheitsbestimmung und die Analyse des Umesterungsgrads erfolgt mittels ¹³C-NMR. Dort ist die Verschiebung der CH₂- Gruppe 61,8 ppm (neben der OH-Gruppe) gegenüber der angebunden Variante 61,9-62,1 ppm charakteristisch und es kann ein Vergleich gegen verbliebene Ethoxygruppen am Siliziumatom bei 58,0-58,5 ppm erfolgen.

### Beispiele 4-6: Gummitechnische Untersuchung

Die verwendeten Materialien sind in Tabelle 1 aufgeführt. Die verwendeten Messmethoden für die Mischungen und deren Vulkanisate erfolgte gemäß Tabelle 2. Die Kautschukmischungen wurden mit einem GK 1,5 E Innenmischer der Firma Harburg Freudenberger Maschinenbau GmbH hergestellt.

**Tabelle 1: Liste der in den Beispielen 4-6 verwendeten Materialien**

| | |
|---|---|
| L-SBR | BUNA^{®} VSL 4526-2, Ultrapolymers Deutschland GmbH |
| f-L-SBR-1 | SPRINTAN^{™} SLR 4602-SCHKOPAU, TRINSEO^{™} |
| f-L-SBR-2 | BUNA^{®} FX 3234A-2 HM, ARLANXEO^{®} |
| BR | BUNA^{®} CB 24, Ultrapolymers Deutschland GmbH |
| Kieselsäure | ULTRASIL^{®} 7000 GR, Evonik Industries AG |
| Ruß | CORAX^{®} N330, Gustav Grolmann GmbH & Co. KG |
| Silan VP Si 263 | Evonik Resource Efficiency GmbH |
| ZnO | Zinkweiss Rotsiegel, Grillo Zinkoxid GmbH |
| Stearinsäure | Edenor ST1, Caldic Deutschland GmbH |
| Öl | Vivatec 500, Hansen & Rosenthal KG |
| Wachs | Protektor G 3108, Paramelt B.V. |
| 6PPD | Vulkanox^{®} 4020/LG, Rhein- Chemie GmbH |
| TMQ | Vulkanox^{®} HS/LG, Rhein- Chemie GmbH |
| DPG | Rhenogran^{®} DPG-80, Rhein- Chemie GmbH |
| CBS | Vulkacit^{®} CZ/EG-C, Rhein- Chemie GmbH |
| Schwefel | Mahlschwefel, Azelis S.A. |
| TBzTD | Richon TBzTD OP, Weber & Schaer GmbH & Co. KG |
| NR | SMR 10, Wurfbain Nordmann GmbH mastiziert bei Harburg-Freudenberger Maschinenbau GmbH |

**Tabelle 2: Liste der in Beispiel 4-6 verwendeten physikalischen Prüfmethoden**

| Methode | Norm |
|---|---|
| Rubber Process Analyzer (RPA) Strain Sweep | ASTM D7605 |
| *Schubmodulunterschied (G***): Maximaler Schubmodul (MPa) - Minimaler Schubmodul (MPa)* | |
| Zug-Dehnung an S1 Probenkörper bei 23 °C | DIN 53 504 |
| *Zugfestigkeit (MPa)* | |
| *Modul bei 300% Dehnung (MPa)* | |
| *Verstärkungsfaktor: Modul bei 300% Dehnung (MPa)* / *Modul bei 100% Dehnung (MPa)* | |
| Abriebprüfung (mm³) | DIN ISO 4649 ASTM D5963 |
| Dynamisch-mechanische Messung bei 60 °C | DIN 53513 |
| *Dynamischer Komplexmodul E** *bei 60* °*C (MPa)* | |

### Beispiel 4: Lösungs-Styrol-Butadien-Kautschuk/Butadien - Kautschuk Mischung (L-SBR/BR) mit Silanen der Vergleichsbeispiele 1 und 2 sowie Beispiel 1-3

Die Mischungsrezeptur ist in Tabelle 3 aufgeführt.

**Tabelle 3: Mischungsrezeptur der L-SBR/BR Mischung**

| Substanz | Mischung 1 phr Vergleich | Mischung 2 phr Vergleich | Mischung 3 phr Erfindungs-gemäß | Mischung 4 phr Erfindungs-gemäß | Mischung 5 phr Erfindungs-gemäß | Mischung 6 phr Erfindungs-gemäß |
|---|---|---|---|---|---|---|
| 1. Stufe | | | | | | |
| L-SBR | 96,3 | 96,3 | 96,3 | 96,3 | 96,3 | 96,3 |
| BR | 30 | 30 | 30 | 30 | 30 | 30 |
| Kieselsäure | 80 | 80 | 80 | 80 | 80 | 80 |
| Vergleichsbeispiel 1 | 7,12 | - | - | - | - | - |
| Vergleichsbeispiel 2 | - | 8,29 | - | - | - | - |
| Beispiel 2 | - | - | 8,62 | - | - | 7,76 |
| Beispiel 3 | - | - | - | - | 8,84 | - |
| VP Si 263 | - | - | - | - | - | 0,58 |
| Beispiel 1 | - | - | - | 10,81 | - | - |
| Ruß | 5,0 | 5,0 | 5,0 | 5,0 | 5,0 | 5,0 |
| ZnO | 2,0 | 2,0 | 2,0 | 2,0 | 2,0 | 2,0 |
| Stearinsäure | 2,0 | 2,0 | 2,0 | 2,0 | 2,0 | 2,0 |
| Öl | 8,75 | 8,75 | 8,75 | 8,75 | 8,75 | 8,75 |
| Wachs | 2,0 | 2,0 | 2,0 | 2,0 | 2,0 | 2,0 |
| 6PPD | 2,0 | 2,0 | 2,0 | 2,0 | 2,0 | 2,0 |
| TMQ | 1,5 | 1,5 | 1,5 | 1,5 | 1,5 | 1,5 |

| 2. Stufe | | | | | | |
|---|---|---|---|---|---|---|
| Batch 1. Stufe | | | | | | |
| DPG | 2,5 | 2,5 | 2,5 | 2,5 | 2,5 | 2,5 |

| 3. Stufe | | | | | | |
|---|---|---|---|---|---|---|
| Batch 2. Stufe | | | | | | |
| CBS | 1,6 | 1,6 | 1,6 | 1,6 | 1,6 | 1,6 |
| Schwefel | 2,0 | 2,0 | 2,0 | 2,0 | 2,0 | 2,0 |
| TBzTD | 0,2 | 0,2 | 0,2 | 0,2 | 0,2 | 0,2 |

Die Mischungsherstellung ist in Tabelle 4 beschrieben.

**Tabelle 4: Mischungsherstellung der L-SBR/BR Mischung**

| **1. Stufe** | GK 1,5 E, Vorlauftemp. 70 °C, 70 Upm, Füllfaktor 0,65 |
|---|---|
| | Batchtemp.: 145 - 155 °C |
| 0,0 - 0,5' | Polymere |
| 0,5-1,0' | TMQ, 6PPD |
| 1,0 - 2,0' | 1/2 Kieselsäure, Silan(e), ZnO, Stearinsäure |
| 2,0 - 2,0' | Lüften, säubern |
| 2,0 - 3,0' | a) Ruß und Öl vormischen und zusammen zugeben |
| | b) 1/2 Kieselsäure |
| | c) restliche Bestandteile der ersten Stufe |
| 3,0 - 3,0' | Säubern |
| 3,0 - 5,0' | Mischen bei 145 - 155 °C ggf. Drehzahl variieren |
| | Auswerfen |
| | Ca. 45 sec, auf der Walze (4 mm Spalt), Fell auswerfen |
| Lagerung: 24 h / RT | |
| | |

| **2. Stufe** | GK, 1,5 E, Vorlauftemp. 80 °C, 80 Upm, Füllfaktor 0,62 |
|---|---|
| | Batchtemp.: 145 - 155 °C |
| 0,0 - 1,0' | Batch 1. Stufe |
| 1,0 - 3,0' | DPG, Mischen bei 145 - 155 °C ggf. Drehzahl variieren |
| 3,0 - 3,0' | Auswerfen |
| | Ca. 45 sec, auf der Walze (4 mm Spalt), Fell auswerfen |

| Lagerung: 4 - 24 h / RT | |
|---|---|
| | |

| **3. Stufe** | GK, 1,5 E, Vorlauftemp. 50 °C, 55 Upm, Füllfaktor 0,59 |
|---|---|
| | Batchtemp.: 90 - 110 °C |
| 0,0 - 2,0' | Batch 2. Stufe, Beschleuniger, Schwefel |
| 2,0 - 2,0' | Auswerfen und auf der Walze ca. 20 sec, mit 3 - 4 mm Spalt verarbeiten |
| Lagerung: 12 h / RT | |

Die Ergebnisse physikalischer Tests an den hier genannten Kautschukmischungen und deren Vulkanisaten sind in Tabelle 5 aufgeführt. Die Vulkanisate wurden aus den Rohmischungen der dritten Stufe durch Heizen bei 165 C für 14 min unter 130 bar hergestellt.

**Tabelle 5: Ergebnisse physikalischer Tests der Kautschukmischungen und deren Vulkanisaten**

| Methode | Mischung 1 Vergleich | Mischung 2 Vergleich | Mischung 3 Erfindungs-gemäß | Mischung 4 Erfindungs-gemäß | Mischung 5 Erfindungs-gemäß | Mischung 6 Erfindungs-gemäß |
|---|---|---|---|---|---|---|
| Rohmischung | | | | | | |
| Δ Modulus (RPA) / MPa | 0,26 | 0,28 | 0,23 | 0,20 | 0,16 | 0,16 |

| Vulkanisat | | | | | | |
|---|---|---|---|---|---|---|
| DIN-Abrieb / mm³ | 125 | 103 | 76 | 80 | 94 | 77 |

Wie aus Tabelle 5 ersichtlich, zeigen die Mischungen 3-6 mit den erfindungsgemäßen Silanen gegenüber Vergleichsmischung 1 und 2 eine niedrigere Moduldifferenz im RPA strain sweep, was auf ein reduziertes Füllstoffnetzwerk hindeutet. Außerdem zeigen die Vulkanisate dieser Mischungen einen signifikant reduzierten Abrieb in der DIN-Prüfung.

**Beispiel 5:** Funktionalisierter Lösungs-Styrol-Butadien-Kautschuk/ Butadien - Kautschuk Mischung (f-L-SBR/BR) mit Silanen der Vergleichsbeispiele 1 und 2 sowie Beispiel 2

Die Mischungsrezeptur ist in Tabelle 6 aufgeführt.

**Tabelle 6: Mischungsrezeptur der f-L-SBR/BR Mischung**

| Substanz | Mischung 7 phr Vergleich | Mischung 8 phr Vergleich | Mischung 9 phr Erfindungs-gemäß | Mischung 10 phr Vergleich | Mischung 11 phr Vergleich | Mischung 12 phr Erfindungs-gemäß |
|---|---|---|---|---|---|---|
| 1. Stufe | | | | | | |
| -L-SBR-1 | 70,0 | 70,0 | 70,0 | | | |
| f-L-SBR-2 | | | | 96,3 | 96,3 | 96,3 |
| BR | 30 | 30 | 30 | 30 | 30 | 30 |
| Kieselsäure | 80 | 80 | 80 | 80 | 80 | 80 |
| Vergleichsbeispiel 1 | 7,12 | - | - | 7,12 | - | - |
| Vergleichsbeispiel 2 | - | 8,29 | - | - | 8,29 | - |
| Beispiel 2 | - | - | 8,62 | - | - | 8,62 |
| Ruß | 5,0 | 5,0 | 5,0 | 5,0 | 5,0 | 5,0 |
| ZnO | 2,0 | 2,0 | 2,0 | 2,0 | 2,0 | 2,0 |
| Stearinsäure | 2,0 | 2,0 | 2,0 | 2,0 | 2,0 | 2,0 |
| Öl | 35 | 35 | 35 | 8,75 | 8,75 | 8,75 |
| Wachs | 2,0 | 2,0 | 2,0 | 2,0 | 2,0 | 2,0 |
| PPD | 2,0 | 2,0 | 2,0 | 2,0 | 2,0 | 2,0 |
| TMQ | 1,5 | 1,5 | 1,5 | 1,5 | 1,5 | 1,5 |

| 2. Stufe | | | | | | |
|---|---|---|---|---|---|---|
| Batch 1. Stufe | | | | | | |
| DPG | 2,5 | 2,5 | 2,5 | 2,5 | 2,5 | 2,5 |

| 3. Stufe | | | | | | |
|---|---|---|---|---|---|---|
| Batch 2. Stufe | | | | | | |
| CBS | 1,6 | 1,6 | 1,6 | 1,6 | 1,6 | 1,6 |
| Schwefel | 2,0 | 2,0 | 2,0 | 2,0 | 2,0 | 2,0 |
| TBzTD | 0,2 | 0,2 | 0,2 | 0,2 | 0,2 | 0,2 |

Die Mischungsherstellung ist in Tabelle 7 und Tabelle 8 beschrieben.

**Tabelle 7: Mischungsherstellung der f-L-SBR/BR Mischung unter Verwendung von f-L-SBR-1**

| **1. Stufe** | GK 1,5 E, Vorlauftemp.70 °C, 60 Upm, Füllfaktor 0,67 |
|---|---|
| | Batchtemp.: 140 - 155 °C |
| 0,0 - 0,5' | Polymere |
| 0,5 - 1,0' | TMQ, 6PPD |
| 1,0 - 2,0' | 1/2 Kieselsäure, 1/2 Öl (mit etwas Kieselsäure vorvermischt) Silan, ZnO, Stearinsäure |
| 2,0 - 2,0' | Lüften, säubern |
| 2,0 - 3,0' | a) Ruß und 1/2 Öl vormischen und zusammen zugeben |
| | b) 1/2 Kieselsäure |
| | c) restliche Bestandteile der ersten Stufe |
| 3,0 - 3,0' | Säubern |
| 3,0 - 5,0' | Mischen bei 140 - 155 °C ggf. Drehzahl variieren |
| | Auswerfen |
| | Ca. 45 sec, auf der Walze (4 mm Spalt), Fell auswerfen |
| Lagerung: 24 h / RT | |
| | |

| **2. Stufe** | GK 1,5 E, Vorlauftemp. 70 °C, 70 Upm, Füllfaktor 0,62 |
|---|---|
| | Batchtemp.: 140 - 155 °C |
| 0,0 - 1,0' | Batch 1. Stufe |
| 1,0 - 3,0' | DPG, Mischen bei 140 - 155 °C ggf. Drehzahl variieren |
| 3,0 - 3,0' | Auswerfen |
| | Ca. 45 sec, auf der Walze (4 mm Spalt), Fell auswerfen |

| Lagerung: 4 - 24 h / RT | |
|---|---|
| | |

| **3. Stufe** | GK 1,5 E, Vorlauftemp. 50 °C, 40 Upm, Füllfaktor 0,58 |
|---|---|
| | Batchtemp.: 90 - 110 °C |
| 0,0 - 2,0' | Batch 2. Stufe, Beschleuniger, Schwefel |
| 2,0 - 2,0' | Auswerfen und auf der Walze ca. 20 sec, mit 3 - 4 mm Spalt verarbeiten |
| Lagerung: 12 h / RT | |

**Tabelle 8: Mischungsherstellung der f-L-SBR/BR Mischung unter Verwendung von f-L-SBR-2**

| **1. Stufe** | GK 1,5 E, Vorlauftemp. 70 °C, 60 Upm, Füllfaktor 0,67 |
|---|---|
| | Batchtemp.: 140 - 155 °C |
| 0,0 - 0,5' | Polymere |
| 0,5 - 1,0' | TMQ, 6PPD |
| 1,0 - 2,0' | 1/2 Kieselsäure, Silan, ZnO, Stearinsäure |
| 2,0 - 2,0' | Lüften, säubern |
| 2,0 - 3,0' | a) Ruß und Öl vormischen und zusammen zugeben |
| | b) 1/2 Kieselsäure |
| | c) restliche Bestandteile der ersten Stufe |
| 3,0 - 3,0' | Säubern |
| 3,0 - 5,0' | Mischen bei 140 - 155 °C ggf. Drehzahl variieren |
| | Auswerfen |
| | Ca. 45 sec, auf der Walze (4 mm Spalt), Fell auswerfen |
| Lagerung: 24 h / RT | |
| | |

| **2. Stufe** | GK 1,5 E, Vorlauftemp. 70 °C, 70 Upm, Füllfaktor 0,62 |
|---|---|
| | Batchtemp.: 140 - 155 °C |
| 0,0 - 1,0' | Batch 1. Stufe |
| 1,0 - 3,0' | DPG, Mischen bei 140 - 155 °C ggf. Drehzahl variieren |
| 3,0 - 3,0' | Auswerfen |
| | Ca. 45 sec, auf der Walze (4 mm Spalt), Fell auswerfen |

| Lagerung: 4 - 24 h / RT | |
|---|---|
| | |

| **3. Stufe** | GK 1,5 E, Vorlauftemp. 50 °C, 40 Upm, Füllfaktor 0,58 |
|---|---|
| | Batchtemp.: 90 - 110 °C |
| 0,0 - 2,0' | Batch 2. Stufe, Beschleuniger, Schwefel |
| 2,0 - 2,0' | Auswerfen und auf der Walze ca. 20 sec, mit 3 - 4 mm Spalt verarbeiten |
| Lagerung: 12 h / RT | |

Die Ergebnisse physikalischer Tests an den hier genannten Kautschukmischungen bzw. deren Vulkanisaten sind in Tabelle 9 aufgeführt. Die Vulkanisate wurden aus den Rohmischungen der dritten Stufe durch Heizen bei 165 °C für 17 min unter 130 bar hergestellt.

**Tabelle 9: Ergebnisse physikalischer Tests der Vulkanisate**

| Methode | Mischung 7 Vergleich | Mischung 8 Vergleich | Mischung 9 Erfindungs-gemäß | Mischung 10 Vergleich | Mischung 11 Vergleich | Mischung 12 Erfindungs-gemäß |
|---|---|---|---|---|---|---|
| Vulkanisat | | | | | | |
| DIN-Abrieb, 5 N / mm³ | 26 | 26 | 24 | 41 | 33 | 31 |
| Dynamische Steifigkeit bei 60 °C / MPa | 6,1 | 6,7 | 7,2 | 6,9 | 7,1 | 8,7 |

Wie aus Tabelle 9 ersichtlich, zeigen die Vulkanisate der Mischungen 9 bzw. 12 mit dem erfindungsgemäßen Silan gegenüber den Vergleichsmischungen 7 und 8 bzw. 10 und 11 eine Verbesserung im Abriebwiderstand nach DIN bei gleichzeitig höherer dynamischer Steifigkeit.

### Beispiel 6: Naturkautschuk-Mischung (NR) mit Silanen der Vergleichsbeispielen 1 und 2 sowie Beispielen 1 und 2

Die Mischungsrezeptur ist in Tabelle 10 aufgeführt.

**Tabelle 10: Mischungsrezeptur der NR Mischung**

| Substanz | Mischung 13 phr Vergleich | Mischung 14 phr Vergleich | Mischung 15 phr Erfindungs-gemäß | Mischung 16 phr Erfindungs-gemäß | Mischung 17 phr Erfindungs-gemäß |
|---|---|---|---|---|---|
| 1. Stufe | | | | | |
| NR | 100 | 100 | 100 | 100 | 100 |
| Kieselsäure | 55 | 55 | 55 | 55 | 55 |
| Vergleichsbeispiel 1 | 6,14 | - | - | - | - |
| Vergleichsbeispiel 2 | - | 7,14 | - | - | - |
| Beispiel 2 | - | - | 7,43 | - | 6,69 |
| VP Si 263 | - | - | - | - | 0,50 |
| Beispiel 1 | - | - | - | 9,32 | - |
| ZnO | 3,0 | 3,0 | 3,0 | 3,0 | 3,0 |
| Stearinsäure | 3,0 | 3,0 | 3,0 | 3,0 | 3,0 |
| Wachs | 1,0 | 1,0 | 1,0 | 1,0 | 1,0 |
| PPD | 1,0 | 1,0 | 1,0 | 1,0 | 1,0 |
| TMQ | 1,0 | 1,0 | 1,0 | 1,0 | 1,0 |

| 2. Stufe | | | | | |
|---|---|---|---|---|---|
| Batch 1. Stufe | | | | | |

| 3. Stufe | | | | | |
|---|---|---|---|---|---|
| Batch 2. Stufe | | | | | |
| CBS | 1,0 | 1,0 | 1,0 | 1,0 | 1,0 |
| Schwefel | 2,0 | 2,0 | 2,0 | 2,0 | 2,0 |
| DPG | 2,5 | 2,5 | 2,5 | 2,5 | 2,5 |

Die Mischungsherstellung ist in Tabelle 11 beschrieben.

**Tabelle 11: Mischungsherstellung der NR Mischung**

| **1. Stufe** | GK 1,5 E, Vorlauftemp. 70 °C, 70 Upm, Füllfaktor 0,65 |
|---|---|
| | Batchtemp.: 140 - 150 °C |
| 0,0 - 0,5' | Polymer |
| 0,5 - 1,5' | 1/2 Kieselsäure, Silan(e), ZnO, Stearinsäure |
| 1,5 - 1,5' | Lüften und säubern |
| 1,5 - 2,5' | 1/2 Kieselsäure, restliche Bestandteile der ersten Stufe |
| 2,5 - 2,5' | Lüften und säubern |
| 2,5 - 4,0' | Mischen bei 140 - 150 °C ggf. Drehzahl variieren |
| 4,0 - 4,0' | Lüften |
| 4,0 - 5,5' | Mischen bei 140 - 150 °C ggf. Drehzahl variieren |
| | Auswerfen |
| | Ca. 45 sec, auf der Walze (4 mm Spalt), Fell auswerfen |
| Lagerung: 24 h / RT | |
| | |

| **2. Stufe** | GK 1,5 E, Vorlauftemp. 80 °C, 80 Upm, Füllfaktor 0,62 |
|---|---|
| | Batchtemp.: 140 - 150 °C |
| 0,0 - 1,0' | Batch 1. Stufe |
| 1,0 - 3,0' | Mischen bei 140 - 150 °C ggf. Drehzahl variieren |
| | Auswerfen |
| | Ca. 45 sec, auf der Walze (4 mm Spalt), Fell auswerfen |
| Lagerung: 4 - 24 h / RT | |
| | |

| **3. Stufe** | GK 1,5 E, Vorlauftemp. 50 °C, 55 Upm, Füllfaktor 0,59 |
|---|---|
| | Batchtemp.: 90 - 110 °C |
| 0,0 - 2,0' | Batch 2. Stufe, Beschleuniger, Schwefel |
| 2,0 - 2,0' | Auswerfen und auf der Walze ca. 20 sec, mit 3 - 4 mm Spalt verarbeiten |
| Lagerung: 12 h / RT | |

Die Ergebnisse physikalischer Tests an den hier genannten Kautschukmischungen bzw. deren Vulkanisaten sind in Tabelle 12 aufgeführt. Die Vulkanisate wurden aus den Rohmischungen durch Heizen bei 150 °C für 17 min unter 130 bar hergestellt.

**Tabelle 12: Ergebnisse physikalischer Tests der Vulkanisate**

| Methode | Mischung 13 Vergleich | Mischung 14 Vergleich | Mischung 15 Erfindungs-gemäß | Mischung 16 Erfindungs-gemäß | Mischung 17 Erfindungs-gemäß |
|---|---|---|---|---|---|
| Vulkanisat | | | | | |
| Zugfestigkeit bei 23 °C / MPa | 23,6 | 23,1 | 26,3 | 24,5 | 25,1 |
| M300% / MPa | 6,2 | 7,9 | 9,2 | 8,4 | 9,0 |
| M300%/M100% | 3,9 | 4,0 | 4,4 | 4,4 | 4,5 |
| DIN-Abrieb / mm³ | 159 | 152 | 110 | 136 | 138 |
| Dynamische Steifigkeit bei 60 °C / MPa | 6,7 | 6,8 | 7,4 | 7,0 | 7,2 |

Aus Tabelle 12 ist ersichtlich, dass die Vulkanisate der Mischungen 15-17 mit den erfindungsgemäßen Silanen eine verbesserte Zugfestigkeit, einen verbesserten Modul 300%, sowie Verstärkungsfaktor (M300%/M100%) aufweisen. Des Weiteren zeigen die Mischungen Vorteile im Abriebwiderstand nach DIN bei gleichzeitig höherer dynamischer Steifigkeit.

## Patentansprüche

1. Thioethersilan der Formel I
(R¹)ₓ(R²)₃₋ₓSi-R³-S-C(CH₂R⁴)_{y}(R⁵)_{3-y} (I),
wobei R¹ gleich oder verschieden sind und C1-C10-Alkoxygruppen, Phenoxygruppen, C4-C10-Cycloalkoxygruppen oder Alkylpolyethergruppen -O-(R⁶-O)ᵣ-R⁷ sind, wobei R⁶ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind, r eine ganze Zahl von 1 bis 30 ist und R⁷ eine unsubstituierte oder substituierte, verzweigte oder unverzweigte einbindige Alkyl-, Alkenyl-, Aryl- oder Aralkylgruppe ist,
R² gleich oder verschieden sind und C6-C20-Arylgruppen, C1-C10-Alkylgruppen, C2-C20-Alkenylgruppen, C7-C20-Aralkylgruppen oder Halogen sind,
R³ eine verzweigte oder unverzweigte, gesättigte oder ungesättigte, aliphatische, aromatische oder gemischt aliphatische/aromatische zweibindige C1-C30-Kohlenwasserstoffgruppe ist,
R⁴ gleich oder verschieden sind und H, verzweigte oder unverzweigte, gesättigte oder ungesättigte, aliphatische C1-C30-Kohlenwasserstoffgruppen sind,
R⁵ gleich oder verschieden sind und unsubstituierte C6-C20-Arylgruppen, Alkyl substituierte C6-C20-Arylgruppen oder -C≡C-R⁸-Gruppen sind, wobei R⁸ H, eine unsubstituierte oder substituierte, verzweigte oder unverzweigte einbindige Alkylgruppe oder eine C6-C20-Arylgruppe ist, und x gleich 1, 2 oder 3 ist, y gleich 1 oder 2 ist.

2. Thioethersilan gemäß Anspruch 1, **dadurch gekennzeichnet, dass** R⁵ gleich oder verschieden sind und unsubstituierte C6-C20-Arylgruppen oder Alkyl substituierte C6-C20-Arylgruppen sind.

3. Thioethersilan gemäß Anspruch 2, **dadurch gekennzeichnet, dass** R⁵ Phenyl ist.

4. Thioethersilan gemäß Anspruch 3, **dadurch gekennzeichnet, dass** y gleich 2 ist.

5. Verfahren zur Herstellung eines Silans gemäß Anspruch 1, **dadurch gekennzeichnet, dass** man das Silan der Formel II
(R¹)ₓ(R²)₃₋ₓSi-R³-SH (II)
mit einem Alken der Formel III
R⁴-HC≡C(CH₂R⁴)_{y-1}(R¹)_{3-y} (III),
umsetzt, wobei R¹, R², R³, R⁴, R⁵, x und y die gleiche Bedeutung wie in Anspruch 1 haben.

6. Verfahren zur Herstellung eines Silans gemäß Anspruch 5, **dadurch gekennzeichnet, dass** AlCl₃ als Katalysator verwendet wird.

7. Verfahren zur Herstellung eines Silans gemäß Anspruch 5 oder 6, **dadurch gekennzeichnet, dass** R⁴ H und R⁵ Phenyl ist.

8. Kautschukmischungen, **dadurch gekennzeichnet, dass** diese mindestens einen Kautschuk und mindestens ein Thioethersilan gemäß Anspruch 1 enthalten.

9. Kautschukmischungen gemäß Anspruch 8, **dadurch gekennzeichnet, dass** diese ein Mercaptosilan enthält.

10. Verwendung der Kautschukmischungen gemäß Anspruch 8 in Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

## Claims

1. Thioether silane of the formula I
(R¹)ₓ(R²)₃₋ₓSi-R³-S-C(CH₂R⁴)_{y}(R⁵)_{3-y} (I)
where R¹ is the same or different and is C1-C10-alkoxy groups, phenoxy groups, C4-C10-cycloalkoxy groups or alkyl polyether groups -O-(R⁶-O)ᵣ-R⁷ where R⁶ is the same or different and is a branched or unbranched, saturated or unsaturated, aliphatic, aromatic or mixed aliphatic/aromatic divalent C1-C30 hydrocarbon group, r is an integer from 1 to 30 and R⁷ is an unsubstituted or substituted, branched or unbranched, monovalent alkyl, alkenyl, aryl or aralkyl group,
R² is the same or different and is C6-C20-aryl groups, C1-C10-alkyl groups, C2-C20-alkenyl groups, C7-C20-aralkyl groups or halogen,
R³ is a branched or unbranched, saturated or unsaturated, aliphatic, aromatic or mixed aliphatic/aromatic divalent C1-C30 hydrocarbon group,
R⁴ is the same or different and is H, branched or unbranched, saturated or unsaturated, aliphatic C1-C30 hydrocarbon groups,
R⁵ is the same or different and is unsubstituted C6-C20-aryl groups, alkyl-substituted C6-C20-aryl groups or -C≡C-R⁸ groups where R⁸ is H, an unsubstituted or substituted, branched or unbranched monovalent alkyl group or a C6-C20-aryl group, and x = 1, 2 or 3, y = 1 or 2.

2. Thioether silane according to Claim 1, **characterized in that** R⁵ is the same or different and is unsubstituted C6-C20-aryl groups or alkyl-substituted C6-C20-aryl groups.

3. Thioether silane according to Claim 2, **characterized in that** R⁵ is phenyl.

4. Thioether silane according to Claim 3, **characterized in that** y = 2.

5. Process for preparing a silane according to Claim 1, **characterized in that** the silane of the formula II
(R¹)ₓ(R²)₃₋ₓSi-R³-SH (II)
is reacted with an alkene of the formula III
R⁴-HC=C (CH₂R⁴)_{y-1}(R⁵)_{3-y} (III)
where R¹, R², R³, R⁴, R⁵, x and y are as defined in Claim 1.

6. Process for preparing a silane according to Claim 5, **characterized in that** AlCl₃ is used as catalyst.

7. Process for preparing a silane according to Claim 5 or 6, **characterized in that** R⁴ is H and R⁵ is phenyl.

8. Rubber mixtures, **characterized in that** they comprise at least one rubber and at least one thioether silane according to Claim 1.

9. Rubber mixtures according to Claim 8, **characterized in that** they comprise a mercaptosilane.

10. Use of the rubber mixtures according to Claim 8 in pneumatic tyres, tyre treads, cable sheaths, hoses, drive belts, conveyor belts, roll coverings, tyres, footwear soles, gasket rings and damping elements.

## Revendications

1. Thioéthersilane de formule I
(R¹)ₓ(R²)₃₋ₓSi-R³-S-C(CH₂R⁴)_{y}(R⁵)_{3-y} (I),
dans laquelle
les radicaux R¹sont identiques ou différents et représentent des groupes C₁-C₁₀-alcoxy, des groupes phénoxy, des groupes C₄-C₁₀-cycloalcoxy ou des groupes alkylpolyéther -O-(R⁶-O)ᵣ-R⁷, les radicaux R⁶ étant identiques ou différents et représentant un groupe hydrocarboné en C₁-C₃₀ ramifié ou non ramifié, saturé ou insaturé, aliphatique, aromatique ou aliphatique/aromatique mixte, divalent, r représentant un nombre entier de 1 à 30 et R⁷ représentant un groupe alkyle, alcényle, aryle ou aralkyle non substitué ou substitué, ramifié ou non ramifié, monovalent,
les radicaux R²sont identiques ou différents et représentent des groupes C₆-C₂₀-aryle, C₁-C₁₀-alkyle, C₂-C₂₀-alcényle, C₇-C₂₀-aralkyle ou halogène,
R³ représente un groupe hydrocarboné en C₁-C₃₀ ramifié ou non ramifié, saturé ou insaturé, aliphatique, aromatique ou aliphatique/aromatique mixte, divalent,
les radicaux R⁴sont identiques ou différents et représentent H, des groupes hydrocarbonés en C₁-C₃₀ ramifiés ou non ramifiés, saturés ou insaturés, aliphatiques,
les radicaux R⁵sont identiques ou différents et représentent des groupes C₆-C₂₀-aryle non substitués, des groupes C₆-C₂₀-aryle substitués par alkyle ou des groupes -C≡C-R⁸, R⁸ représentant H, un groupe alkyle non substitué ou substitué, ramifié ou non ramifié, monovalent ou un groupe C₆-C₂₀-aryle,
et x vaut 1, 2 ou 3, y vaut 1 ou 2.

2. Thioéthersilane selon la revendication 1, **caractérisé en ce que** les radicaux R⁵ sont identiques ou différents et représentent des groupes C₆-C₂₀-aryle non substitués ou des groupes C₆-C₂₀-aryle substitués par alkyle.

3. Thioéthersilane selon la revendication 2, **caractérisé en ce que** R⁵ représente phényle.

4. Thioéthersilane selon la revendication 3, **caractérisé en ce que** y vaut 2.

5. Procédé pour la préparation d'un silane selon la revendication 1, **caractérisé en ce qu'**on transforme le silane de formule II
(R¹)ₓ(R²)₃₋ₓSi-R³-SH (II)
avec un alcène de formule III
R⁴-HC=C (CH₂R⁴)_{y-1}(R⁵)_{3-y} (III),
R¹, R², R³, R⁴, R⁵, x et y présentant la même signification que dans la revendication 1.

6. Procédé pour la préparation d'un silane selon la revendication 5, **caractérisé en ce qu'**on utilise de l'AlCl₃ comme catalyseur.

7. Procédé pour la préparation d'un silane selon la revendication 5 ou 6, **caractérisé en ce que** R⁴ représente H et R⁵ représente phényle.

8. Mélanges de caoutchouc, **caractérisés en ce que** ceux-ci contiennent au moins un caoutchouc et au moins un thioéthersilane selon la revendication 1.

9. Mélanges de caoutchouc selon la revendication 8, **caractérisés en ce que** celui-ci contient un mercaptosilane.

10. Utilisation de mélanges de caoutchouc selon la revendication 8 dans des chambres à air, des bandes de roulement de pneus, des gaines de câbles, des flexibles, des courroies de transmission, des bandes transporteuses, des revêtements de cylindres, des pneus, des semelles pour chaussures, des joints annulaires d'étanchéité et des éléments amortisseurs.
